Europäisches Patentamt

European Patent Office

Office européen des brevets

(11) Publication number: **0 343 125**
**A1**

## EUROPEAN PATENT APPLICATION

(21) Application number: **89830210.4**

(22) Date of filing: **16.05.89**

(51) Int. Cl.⁴: **H 02 K 3/34**
**H 02 K 1/28**

(30) Priority: **17.05.88 IT 346188**

(43) Date of publication of application:
**23.11.89 Builetin 89/47**

(84) Designated Contracting States:
**AT BE CH DE ES FR GB GR LI NL SE**

(71) Applicant: **SPAL S.r.l.**
**26/B, Via per Carpi**
**I-42015 Correggio(Reggio Emilia) (IT)**

(72) Inventor: **Spaggiari, Terzino**
**Via Leonardo da Vinci, 8**
**I-42015 Correggi (Reggio Emilia) (IT)**

(74) Representative: **Pederzini, Paolo**
**BUGNION S.p.A. Via Farini n. 37**
**I-40124 Boiogna (IT)**

(54) A method of embodying the rotors of electric motors and the rotor obtained with such a method.

(57) The method is one of fashioning rotors for small electric motors by punching core laminations (1) of centreless annular shape, positioning and pinning the assembled core firmly between the two halves of a split mould, and injecting an insulating plastic material (10) into the remaining interspace; once cooled and hardened, the plastic is formed into a non-conductive cladding that envelops the solid rings (2) of the laminations (1) together with the lateral surfaces (3b) of the slot-dividing fins (3) and the base (7a) of each slot (7), and is integral with a hub (4), and a rigid support structure (6) by which the core cladding and the hub are radially interconnected.

FIG 2

## Description

### A method of embodying the rotors of electric motors and the rotor obtained with such a method

The invention relates to a method of embodying the rotors of electric motors, in particular low power high speed units such as those utilized for fans or automobile dynamos, and to a rotor obtainable by the implementation of such a method.

As a person skilled in the art well knows, a rotor, or in the case of an electric motor, the armature, constitutes the rotating component in an electric machine.

A rotor generally consists in a set of punched laminations, each exhibiting alternating fins and slots around the periphery and a hole at centre. The laminations are assembled coaxially, sandwiched together to form a core and mounted to a shaft by way of the centre holes, which create a hub when brought together; thus united, the core laminations create a magnetic circuit, so called. The slots are designed to accommodate windings arranged according to a given pattern and constituting the electrical circuit of the machine.

In particular, armatures typical of the motors in question can be wound in direct fashion, or the windings can be fitted non-directly using preformed coils.

In mass production, direct windings are effected using a special-purpose armature winding machine, which is programmed to coil the wire directly onto the magnetic circuit in a set pattern. A non-direct type winding, on the other hand, is one fashioned from a set of ready-made coils prepared previously on special formers for subsequent fitment into the rotor slots. With the windings in place, their ends are bent down into position over the relative ends of the rotor.

Whatever the winding method ultimately adopted, earth insulation must always be provided internally of the slots and at the ends of the rotor. Insulation provided by the conductor sheaths in a winding is in fact never considered sufficient in the face of discharges to earth, i.e. to the core, given that the internal surfaces of the assembled slots are created by the edges of numerous single laminations, and can never be faultlessly smooth. Accordingly, the bundle of conductors fitted into each slot must be protected by a layer of flexible insulating material that will adapt to the contour of the slot, and at the same time resist abrasion. There are two methods of incorporating insulation: one, by application direct to the active area of the conductors, and the other, by application to the wall of the slot. Clearly enough, the simpler solution is that of covering the part of the wires accommodated by the slot (the active area) prior to fitment, though this can only be effected with open profile slots; by contrast, where the profile of slots destined to receive preformed conductors is semi-enclosed, and indeed in all direct winding applications, the insulating material must first be positioned in the slot, projecting both from the radial opening of the slot and from each end of the rotor; thus, once the conductors are in position, the edges can be folded over to cover the winding completely, being tucked back into the slot so as to shield the top part of the winding, and downward over the ends of the core so as to insulate the two ends.

Current methods of incorporating earth insulation involve the use of masking pieces premoulded from plastic material to match the contours of the core laminations, and provided with tongues matching the shape and dimensions of the slots. This type of insulation is fitted to the ends of the rotor under pressure, in such a way as to mask both the slots and the areas of the rotor occupied by the ends of the windings.

The insulation techniques thus outlined are beset by drawbacks of a practical nature, inasmuch as the various operations, being lengthy and demanding great precision, are time-consuming and adversely affect the cost of the end-product; moreover, the fact that the insulation consists in any event of separate structural components fitted at a stage following the embodiment of the magnetic circuit, there is always the risk of minor imperfections in assembly that can trigger electrical breakdown of the rotor, for example as a result of discharges to earth from the winding.

Accordingly, the object of the present invention is one of eliminating such drawbacks in a practical and economical manner.

The stated object is achieved by adoption of a method as characterized in the appended claims; such a method envisages the use of a centreless annular core lamination the structure of which is encompassed between an inner ring and the outermost tips of the fins separating the winding slots, and comprises the expedient of cladding the assembled core in a rigid insulating plastic material formed by injection moulding, utilizing a split mould; the cladding envelops the laminations entirely, with the exception of the outermost tip surfaces of the fins, as well as incorporating a hub at centre and a radial structure by which the assembled core is supported and connected rigidly with the hub.

A first advantage afforded by the invention is that the insulation of the rotor is complete, uniform, and swiftly accomplished. Moreover, the adoption of a centreless annular core lamination design in conjunction with a plastic hub has the effect of reducing the weight of the rotor and thus reducing inertia during its rotation, which in turn enables a reduction in the proportions of the shaft and its bearings.

A further advantage of the invention is that by adopting core laminations of reduced radial width, a more restricted path is offered to magnetic flux, limited almost entirely to the area occupied by the fins; iron losses are therefore reduced, and with a lower magnetizing current, the losses attributable to eddy currents are also reduced.

Another advantage of the invention is that the core laminations are maintained compact without the use of rivets or bolts passing through the rotor in the axial direction and thus forcing the magnetic flux lines to depart from a rectilinear path and give rise to increased iron losses.

Yet another advantage of the invention is that by embodying the rotor hub in rigid plastic material, it becomes possible to obtain good insulation of the core laminations in relation to the shaft. What is more, shoulder profiles can be incorporated into the hub direct, in such a way as to permit more compact axial dimensions than those of conventional rotors which, for example, are locked axially in position by a circlip at either end.

The invention will now be described in detail, by way of example, with the aid of the accompanying drawings, in which:

-fig 1 is the front elevation of a core lamination according to the invention;

-fig 2 is the front elevation of a rotor according to the invention, viewed with certain parts cut away better to reveal others;

-fig 3 shows a radial section through the rotor of fig 2.

The method of embodying rotors for electric motors according to the invention essentially comprises the following steps:

-punching core laminations 1 having a centreless annular structure encompassed by an internal ring 2 on the one hand, and the external profile of the tips 3a of a set of peripheral fins 3 on the other;

-accurately positioning, coaxially aligning and compacting an assembled core of such laminations 1 between the two halves of a split mould;

-injecting a plastic insulating material 10 into the space between the core and the mould in such a way as to create a hub 4 with bosses 4a, one on each side, through which to insert a shaft 5, and a structure 6 supporting and accommodating the core laminations 1, by which the hub 4 and the core are interconnected, and at the same time, to envelop the ring 2, at least the lateral surfaces 3b of the teeth 3, and the bases 7a of the slots 7;

-allowing the plastic insulating material 10 to cool and solidify, then removing the mould. To ensure faultless alignment and compaction of the laminations 1 during the steps of positioning the core in the mould and injecting and cooling the plastic material 10, each half of the mould can be provided with a plurality of pins designed to pass through respective holes 8 in the ring 2 of each lamination, and with projections designed to locate against the solid part of the ring 2.

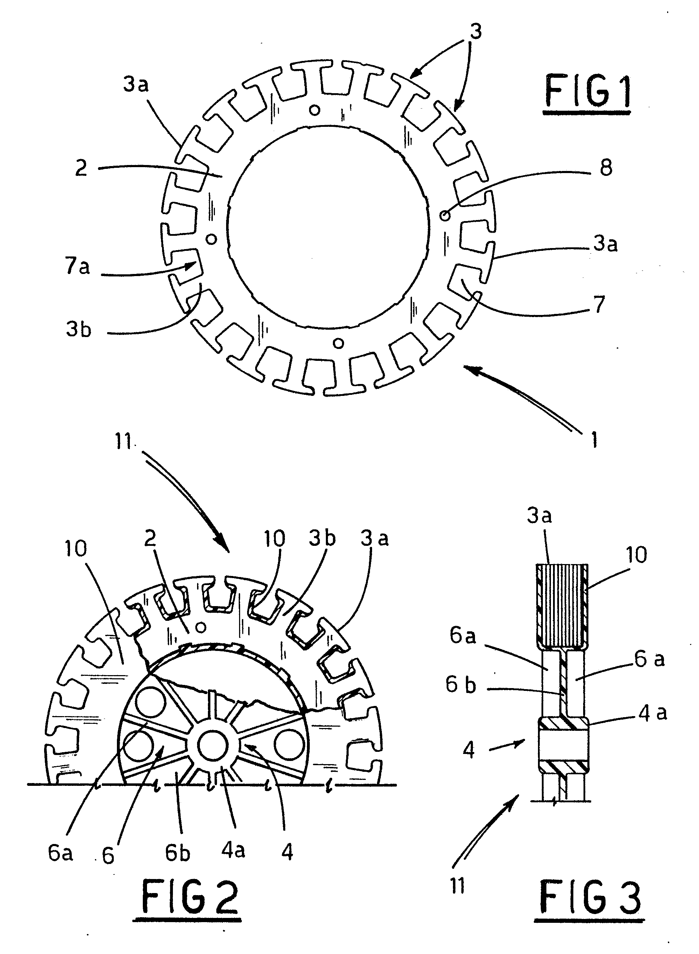

Following solidification of the plastic insulating material 10, the resulting rotor, denoted 11 in figs 2 and 3, will be seen to comprise a plurality of laminations 1 each of which exhibits centreless, annular shape bounded by an internal ring 2 on one hand and the tips 3a of the fins 3 on the other. The laminations 1 are held together in a compact core by a cladding of solidified plastic insulating material 10 that envelops them entirely, except for the outermost tips 3a of the fins 3, and affords a hub 4 at centre, with bosses 4a one on either side, and a structure 6 by which the laminations 1 are supported and connected with the hub 4.

In a preferred embodiment, the support structure 6 might take the form simply of a set of spokes 6a, or alternatively, of spokes 6a interconnected by stiffening webs 6b, according to the mechanical strength requirements of the individual rotor; similarly in a preferred embodiment, the axial dimensions of the hub 4 and bosses 4a will be no greater than those of the support structure 6.

## Claims

1) A method of embodying rotors for electric motors, characterized
in that it comprises the steps of:
-punching core laminations (1) having a centreless annular structure bounded by an inner ring (2) on the one hand, and the external profile of the tips (3a) of a set of peripheral fins (3) on the other;
-accurately positioning, coaxially aligning and compacting an assembled core of such laminations (1) between the two halves of a split mould;
-injecting a plastic insulating material (10) into the space between the core and the mould in such a way as to create a hub (4) with bosses (4a), one on either side, and a structure (6) supporting and accommodating the core laminations (1), by which the hub (4) and the core are interconnected, and at the same time, to envelop the ring (2), at least the lateral surfaces (3b) of the fins (3), and the base (7a) of the slot (7) between each two adjacent fins;
-allowing the plastic insulating material (10) to cool and solidify, then removing the two halves of the mould.

2) A method as in claim 1, wherein the laminations (1) of the core are accurately positioned between the two halves of the mould and held compacted thus in place during the steps of injecting and cooling the plastic insulating material by means, respectively, of a plurality of locating elements afforded by each half of the mould and designed to pass through relative holes (8) provided in the ring (2) of each lamination (1), and of a plurality of interference elements afforded by each half of the mould.

3) A rotor for electric motors of the type comprising a plurality of coaxial, compacted core laminations (1) obtainable by implementation of the method of claims 1 and 2, wherein the single core lamination (1) exhibits a structure of centreless annular shape bounded by an inner ring (2) on the one hand and by the outermost tip profile (3a) of a set of peripheral fins (3) on the other, and the assembled core is compacted and supported by a cladding of rigid plastic insulating material that envelops the laminations entirely, with the sole exception of the cylindrical surface generated by the tips (3a) of the fins (3), and is moulded integral with a hub (4), and with a support structure (6) by which the core and the hub (4) are interconnected.

4) A rotor as in claim 3, wherein the hub (4) is embodied with a boss (4a) on either side, in such a way that the overall axial dimensions of the hub and bosses are no greater than the overall axial dimensions of the support structure (6).

FIG 1

FIG 2

FIG 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| Y | FR-A-1210349 (BERTRAND G.) * page 2, left-hand column, line 5 - right-hand column, line 55; figures 1, 2 * | 1-3 | H02K3/34 H02K1/28 |
| Y | FR-A-1447352 (CARTIER G.) * page 2, left-hand column, line 13 - line 41; figures 1-4 * | 1-3 | |
| A | GB-A-2130811 (S.W.F.) * page 2, line 120 - page 3, line 55; figures 1, 2 * | 1-3 | |

TECHNICAL FIELDS SEARCHED (Int. Cl.4 )

H02K

The present search report has been drawn up for all claims

| Place of search | Date of completion of the search | Examiner |
|---|---|---|
| THE HAGUE | 10 AUGUST 1989 | LE GUAY P.A. |